# EUROPEAN PATENT APPLICATION

(11) **EP 1 371 294 A1**
(43) Date of publication of application: **17.12.2003**
(21) Application number: 03076847.7
(22) Date of filing: 13.06.2003
(51) Int. Cl.: A22C 29/00, A22C 29/02, A22C 29/04

(54) **Device and method for processing shellfish**

(30) Priority: 14.06.2002 NL 1020869
(71) Applicant: Cortech Protect B.V., 4401 AR Yerseke (NL)
(72) Inventor: Cornelisse, Marinus Adriaan Esdra, 4401 AR Yerseke (NL)
(74) Representative: 't Jong, Bastiaan Jacobus

(57) **Abstract**

The invention relates to a device for processing shellfish, comprising a frame on which a housing is arranged which is provided with feed means and discharge means for shellfish, and with a scraping device for shellfish. The scraping device comprises scraping means which are arranged in an inner space of the housing and rotatable around an axis and which are movable along a wall, and drive means for the scraping means, characterized in that the housing has a substantially horizontal longitudinal direction and wherein the axis is arranged substantially in the longitudinal direction of the housing.

## Description

The invention relates to a device for processing shellfish, comprising a frame on which is arranged a housing which is provided with feed means and discharge means for shellfish, and with a scraping device for shellfish comprising scraping means which are arranged in an inner space of the housing and rotatable around an axis and which are movable along a wall, and drive means for the scraping means.

It is known to use drums with a perforated wall to clean shellfish. The drum is provided with a stirring gear which is placed vertically and rotates around a vertical axis. The stirring gear is provided with drive means so that shellfish situated in the drum are scraped against the wall of the drum. Adhered growths are herein dislodged from the shellfish due to the friction between the walls, the scraping means and the product. Such a drum is filled in batches. Flushing with clean water takes place during this process.

In such machines a relatively large part of the product is damaged because operation takes place at high rotation speeds. The object of the invention is to provide a device wherein operation is possible at a lower rotation speed.

This objective is achieved according to the present invention in that the housing has a substantially horizontal longitudinal direction and the axis is arranged in the longitudinal direction of the housing. A horizontal drum is hereby obtained in which the shellfish are scraped. It is hereby possible to operate at a lower rotation speed. The length of the scraping device and the housing can be adjusted. The scraping means set the mussels into a movement around the axis. The wall is for instance a perforated wall which co-acts with the scraping means. The wall is arranged in the form of a drum around the axis in the housing.

A mussel can have all barnacles removed by making use of low centrifugal forces and speeds. Damage to and stress for the mussels are hereby prevented. Stress in the mussel results in a reduction in flavour. This is a specific consequence of the biological and living nature of the product.

The feed means for the shellfish are preferably arranged close to a first outer end in the longitudinal direction and the discharge means for the shellfish close to a second outer end in the longitudinal direction. A continuous processing of the shellfish hereby becomes possible. The shellfish are fed in at one end, subsequently processed by the scraping means coacting with the wall, and discharged at another end. The transporting device is substantially horizontal and inclines slightly downward. The scraping movement takes place transversely thereof.

The wall substantially forms a trough. In a cross-section the wall substantially has a C-shape. The wall hereby forms a receiving space for shellfish in an inner space of the housing. The scraping means rotate inside this trough and herein move along the wall. The trough is open on one side, for instance the top side. Spraying means are preferably arranged close to this opening.

The wall is preferably a perforated wall. The perforations and the rotating scraping means hereby co-act in removing adhered growths, in particular barnacles and byssal threads. The perforations in the wall are adapted to the size of the shellfish. Shellfish cannot pass through the perforations. Nor can they become lodged therein. The wall perforations are adapted to the size of the product for scraping. The materials dislodged from the shells can however disappear through the perforations and be discharged. The perforations also allow a continuous flushing with clean water. The clean water comes into contact with the shellfish and leaves the receiving space through the perforations. It hereby also becomes possible to rinse the shellfish and for instance remove sand.

The wall preferably comprises a number of wall parts which have different perforations. Different scraping operations can hereby be performed. The wall parts are preferably arranged successively in the longitudinal direction/transporting direction. The shellfish being transported in the longitudinal direction is hereby exposed to different treatments. A polishing means can also be arranged, for instance close to the discharge end, thus embellishing the product.

It is favourable that the housing comprises a number of frame strips which are provided with clamping means for engaging a wall or wall part. The wall or different wall parts are manufactured in one plane. These flat parts are then clamped against the frame strips and tensioned by clamping means, wherein for instance the trough shape is formed. It is possible to have available different wall parts with different perforations and to place these at desired moments in the device, depending for instance on the product to be processed. In this manner the walls can also be replaced easily when old.

The scraping means preferably comprises brushing means. The brushing means co-act with the wall and brush the available shellfish along the wall. This generates sufficient friction to scrape the shellfish clean. Wire brushes are preferably used.

The housing is preferably provided with support means for supporting the housing at an incline in the lengthwise direction. The shellfish are hereby transported from the one end in the lengthwise direction to the other end in the lengthwise direction. No special transporting means are required. The axis of the scraping means is still substantially horizontal, at least less than 45°. The inclination also determines the processing speed, i.e. the transporting speed of the shellfish through the scraping device.

In the preferred embodiment the scraping device comprises sensor means for measuring the amount of shellfish present in the housing and/or for measuring a quantity of scraped-off material. It is hereby possible to gain insight into the operation of the device, whereby the infeed speed or discharged amount of the product can for instance be adjusted.

In a further preferred embodiment the scraping device comprises a control means for controlling the drive means and/or the support means. It is hereby possible to exert influence on the processing speed.

In the preferred embodiment the control means is provided with input means which are connected to the sensor means. A continuous and automated device for processing shellfish can hereby be obtained. The device measures a number of variables and adjusts the processing means thereto.

The invention also relates to a method for processing shellfish in a continuous process, comprising of providing shellfish, feeding, guiding in a transporting direction, scraping and discharging shellfish. Such a method is known from a vertical drum for scraping mussels. The drawback of the known method is that the shellfish are damaged.

The object of the invention is to provide a method wherein less damage occurs. This objective is achieved by scraping the shellfish in a direction substantially perpendicular to the substantially horizontal transporting direction. The scraping operation hereby becomes possible along a substantially horizontally progressing path, the length and/or transporting speed of which can be varied. A continuous processing of shellfish hereby also becomes possible.

In a further development guiding of the shellfish is controlled by supporting a guide for shellfish at an incline. The shellfish will hereby be transported to the lower point and be scraped during this movement.

It is advantageous to sense the number of shellfish that are scraped and to control the scraping subject to the sensing. The processing speed can hereby be adjusted to the number of shellfish present.

Scraping preferably takes place along a perforated wall, wherein the scraped-off material is discharged through the wall. The scraped-off materials and the shellfish are hereby separated from each other and in the end only scraped-clean shellfish are discharged.

The shellfish are preferably sprayed during guiding. The shellfish are herein rinsed during the scraping, whereby dirt is removed. The spaying water can be drained through the perforations in the wall.

The invention will be further described with reference to the annexed figures, in which:
figure 1 shows a perspective view of a device in the preferred embodiment according to the invention,
figure 2 shows a detail of the preferred embodiment of figure 1,
figure 3 shows a partly cut-away perspective view of the preferred embodiment of the invention.

Shown is a device 1 which is placed on a frame 2. Device 1 is connected to frame 2 by support means in the form of a mounted shaft 3 which engages on an arm 4 of frame 2, and two hydraulic means 5, 6 which are likewise mounted on frame 2 and mounted on the housing 14 in which the scraping device 7 is accommodated. Hydraulic means 5, 6 can move scraping device 7 up and downward as according to arrow 8, whereby scraping device 7 will pivot on axis 3 as according to arrow 9, whereby scraping device 7 is placed on an incline, running downward from the one end provided with feed means 10 to the other end 11 provided with discharge means of the scraping device 7. The incline is variable. The transporting speed of the product is hereby adjustable.

Arranged close to the higher outer end of scraping device 7 is a feed 10. Contaminated shellfish 12, such as mussels with barnacles and/or byssus, can here be fed as according to arrow 13 into the inner space of housing 14. A shaft 15 is rotatably mounted in the inner space along the longitudinal direction of housing 14, wherein the shaft is provided with brushes 16, 17. Shaft 15 has a substantially horizontal axis. Brushes 16, 17 rotate as according to arrow 25 around axis 15 in the inner space, wherein shellfish 12 are scraped along walls 18. Wall 18 is provided with perforations. Brushes 16, 17 are steel wire brushes having sufficient stiffness to scrape the mussels 12 with suitable force along the walls. The wall consists of five wall parts 18-22 which are arranged adjacently in lengthwise direction of housing 14.

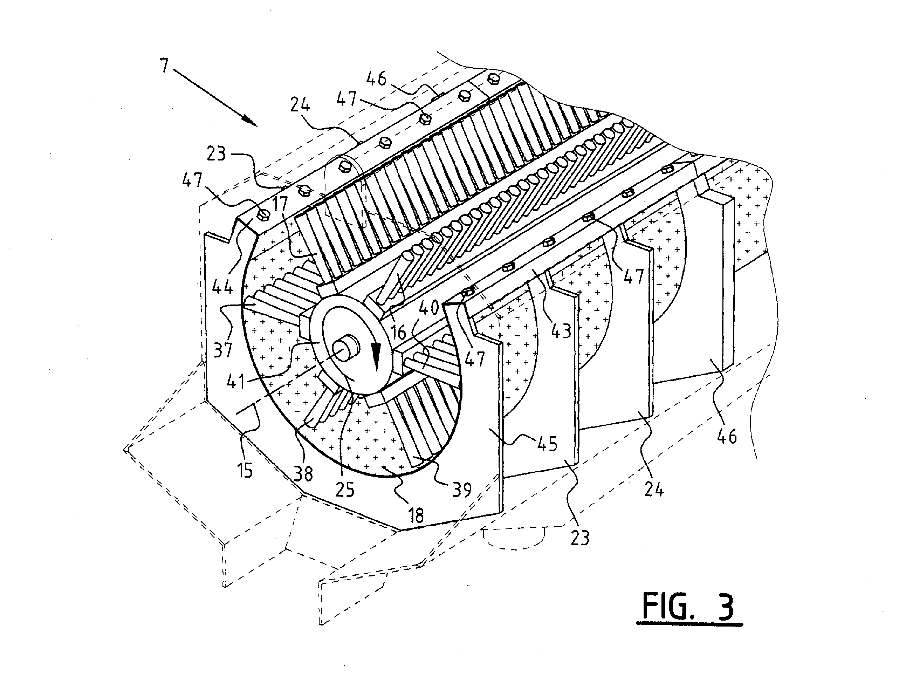

Wall parts 18-22 form a trough of a substantially C-shaped cross-section. The wall parts are supported by respective frame strips 23, 24 arranged at suitable locations, for instance at predetermined distances from each other. The wall parts are held in the trough shape by clamps, see figure 3. By making use of clamps the wall parts can be replaced in simple manner, for instance when old or when the scraping settings are being modified. The scraping settings can for instance depend on the degree of fouling of the mussels and/or the size of the product.

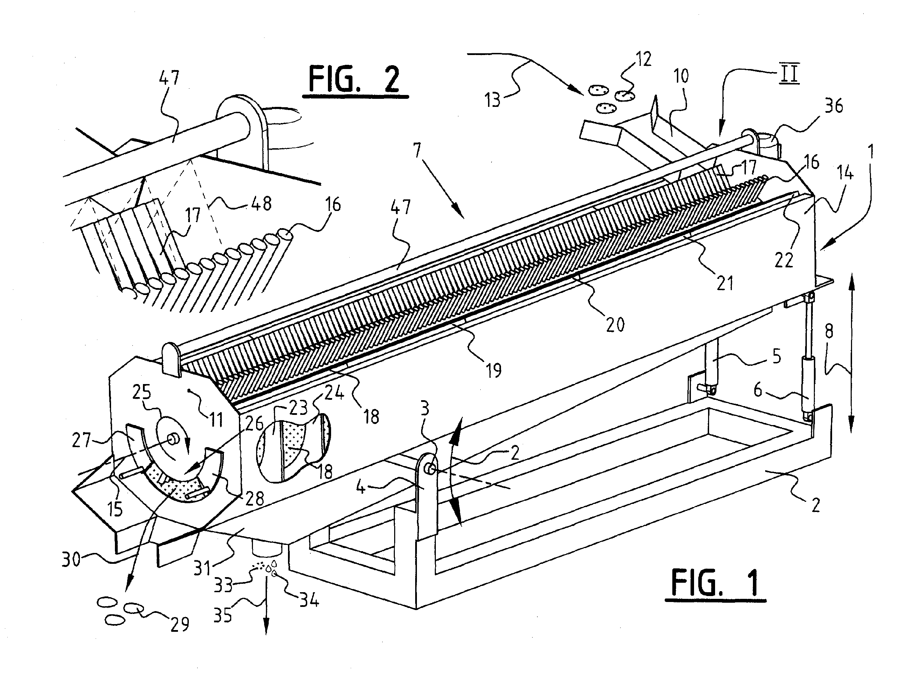

Arranged over the lengthwise direction of housing 14 above the opening of the trough is a pipe 47 which can spray water 48 over the brushes 16, 17 and the inner space of the housing by means of pump 36. This spraying is shown in figure 2, wherein water 48 is shown.

The contaminated shellfish 12 are fed into the inner space of housing 14. The shellfish 12 are supported and guided by wall parts 18-22. Shaft 15 rotates on the axis as according to arrow 25, wherein the contaminated shellfish 12 come to lie between brushes 16 and 17. In the position shown in figure 1 the shellfish 12 are supported between brushes 16 and 17 by shaft 15.

As the rotation proceeds further, the contaminated shellfish will come into contact with inner wall 22. Only when the scraping device has rotated more than 180° from the position shown in figure 1 will the contaminated shellfish 12 situated between brushes 16 and 17 be scraped because brushes 17 push the shellfish along over the inner wall. Sufficient friction herein occurs between wall 22, brushes 17 and shellfish 12 to scrape the shellfish. Shellfish 12 are pushed further over brushes 17 while the rotation proceeds further, and will come to lie once again between brushes 16 and 17.

The incline of housing 12 is set by the hydraulic means 5, 6 subject to the contamination of shellfish 12. The rotation speed of scraping means 16, 17 according to arrow 25 can herein be kept very low. The fragile biological and living material 12 hereby suffers little damage.

After passing through the scraping process in the inner space of housing 14, the shellfish with barnacles and byssus removed are discharged along opening 26 which can be closed with two slidable flaps 27, 28. The cleaned shellfish 29 are discharged as according to arrow 30.

During the scraping process the shellfish 12 are sprayed, wherein clean water 48 is fed to the interior of housing 14. The water 34 will leave the trough through the perforations in the wall and be collected in the tray 31 arranged under housing 14 along the length thereof. The same applies for the dislodged barnacles and byssal threads 33. These also leave the trough through the perforations. The scraped-off materials are collected in tray 31 and discharged as according to arrow 35.

Figure 3 shows a partly cut-away perspective view of the scraping device. Shown is shaft 15 which is rotated as according to arrow 25, wherein the shaft is provided with brushes 16, 17, 37, 38, 39 and 40 arranged at regular mutual distance around a guide roller 41. Upon movement of drive means (not shown), the whole unit of brushes, shaft 15 and guide roller will move as according to arrow 25.

Also clearly shown is the C-shaped cross-section of inner wall 18 along which the brushes 16, 17, 37, 38, 39, 40 move. The brushes fit closely against the wall, whereby sufficient scraping force can be generated.

Wall part 18 has a thickness of 0.5 to 1.5 mm. Wall part 18 can be provided with different perforations. The perforation is adjusted to the extent of the contamination. In the removal of barnacles from shellfish there may be barnacles present varying in diameter from 1 to 10/12 mm. These barnacles are removed if possible because, as a result of their more or less sharp points, the barnacles can cut through a packaging foil for the shellfish, whereby leakage occurs. In addition, barnacles or parts thereof perish quickly, thereby shortening the shelf-life. Barnacles or parts thereof also crack between the teeth during consumption. The presentation of the product is also adversely affected by the presence of barnacles thereon. Because of these drawbacks the purchase price of the raw material is markedly lower than that of a barnacle-free product.

The wall part 18 is clamped between clamping means 43, 44 which are arranged on either side of the trough opening and are connected to frame strips 45, 46 and between frame strips 23, 24. A substantially flat wall part can be clamped into scraping device 7 and take on the substantially round form in that clamps 43, 44 exert sufficient tension on wall part 18 that it follows the round form of frame strips 23, 24, 45, 46. The frame strips are not very wide, so that the discharge through the perforations of wall part 18 is not impeded, or hardly so. Clamping means 43, 44 are secured with bolts 47.

Polishing can also take place in addition to scraping. Barnacles of very diverse sizes can be removed by arranging different wall parts 18-22 adjacently of each other in the longitudinal direction of device 1.

## Claims

1. Device for processing shellfish, comprising a frame on which a housing is arranged which is provided with feed means and discharge means for shellfish, and with a scraping device for shellfish comprising scraping means which are arranged in an inner space of the housing and rotatable around an axis and which are movable along a wall, and drive means for the scraping means, **characterized in that** the housing has a substantially horizontal longitudinal direction and wherein the axis runs substantially in the longitudinal direction of the housing.

2. Device as claimed in claim 1, **characterized in that** the feed means for the shellfish are arranged close to a first outer end in the longitudinal direction and the discharge means for the shellfish close to a second outer end in the longitudinal direction.

3. Device as claimed in claim 1 or 2, **characterized in that** the wall substantially forms a trough.

4. Device as claimed in any of the claims 1-3, **characterized in that** the wall is a perforated wall.

5. Device as claimed in any of the claims 1-4, **characterized in that** the wall comprises a number of wall parts which have different perforations.

6. Device as claimed in any of the claims 1-5, **characterized in that** the housing comprises a number of frame strips which are provided with clamping means for engaging a wall.

7. Device as claimed in any of the claims 1-6, **characterized in that** the scraping means comprise brushing means.

8. Device as claimed in any of the claims 1-7, **characterized in that** the housing is provided with support means for supporting the housing at an incline in the lengthwise direction.

9. Device as claimed in any of the claims 1-8, **characterized in that** the scraping device comprises sensor means for measuring the amount of shellfish present in the housing and/or for measuring a quantity of scraped-off material.

10. Device as claimed in any of the claims 1-9, **characterized in that** the scraping device comprises a control means for controlling the drive means and/or the support means.

11. Device as claimed in claims 9 and 10, **characterized in that** the control means is provided with input means which are connected to the sensor means.

12. Method for processing shellfish in a continuous process, comprising of providing shellfish, feeding, guiding in a transporting direction, scraping and discharging shellfish, **characterized by** scraping the shellfish in a direction substantially perpendicular to the horizontal transporting direction.

13. Method as claimed in claim 12, **characterized by** controlling the guiding of the shellfish by supporting a guide for shellfish at an incline.

14. Method as claimed in claim 12 or 13, **characterized by** sensing the number of shellfish that are scraped and controlling the scraping subject to the sensing.

15. Method as claimed in any of the claims 12-14, **characterized by** scraping along a perforated wall, wherein the scraped-off material is discharged through the wall.
